# EUROPÄISCHE PATENTSCHRIFT

(11) **EP 2 491 259 B1**
(45) Veröffentlichungstag und Bekanntmachung des Hinweises auf die Patenterteilung: **04.09.2013**
(21) Anmeldenummer: 10765404.8
(22) Anmeldetag: 27.09.2010
(51) Int. Cl.: F16C 13/00, D01H 5/74, F16C 19/06, F16C 35/073

(54) **ANDRUCKROLLE FÜR TEXTILMASCHINEN**
PRESSURE ROLLER FOR TEXTILE MACHINES
ROULEAU PRESSEUR POUR MACHINES TEXTILES

(30) Priorität: 23.10.2009 DE 102009050514
(43) Veröffentlichungstag der Anmeldung: 29.08.2012
(73) Patentinhaber: Schaeffler Technologies AG & Co. KG, 91074 Herzogenaurach (DE)
(72) Erfinder: EGBERS, Johann, 91074 Herzogenaurach (DE); JUNGINGER, Uwe, 91217 Hersbruck (DE); MAYR, Christian, 91330 Eggolsheim (DE)
(86) Internationale Anmeldenummer: PCT/EP2010/064256
(87) Internationale Veröffentlichungsnummer: WO 2011/047934

(56) Entgegenhaltungen:
- WO-A1-02/04824
- DE-A1- 2 923 871
- DE-A1- 10 051 852
- DE-A1- 19 733 561
- DE-C1- 19 781 721
- US-A- 1 733 910

## Beschreibung

### Gebiet der Erfindung

Die Erfindung betrifft eine insbesondere für eine Textilmaschine geeignete Andruckrolle nach dem Oberbegriff des Anspruchs 1.

### Hintergrund der Erfindung

Eine gattungsgemäße Andruckrolle ist beispielsweise aus der DE 197 81 721 C1 bekannt. Die Andruckrolle ist insbesondere zur Verwendung in einer Texturiermaschine vorgesehen und weist einen Bezug auf, der unter Zwischenschaltung einer Zwischenhülse auf einer Stützhülse angeordnet ist. Die Stützhülse ist über ein Rillenkugellager gegenüber einem Tragbolzen, in der DE 197 81 721 C1 als Tragachse bezeichnet, drehbar gelagert. Über eine Pendeleinrichtung ist das Rillenkugellager gegenüber dem Tragbolzen quer zu dessen Längsachse kippbar gelagert.

### Aufgabe der Erfindung

Der Erfindung liegt die Aufgabe zugrunde, eine für eine Textilmaschine geeignete Andruckrolle anzugeben, welche bei dem genannten Stand der Technik entsprechender Funktionalität sehr einfach aufgebaut und rationell montierbar ist.

### Zusammenfassung der Erfindung

Diese Aufgabe wird erfindungsgemäß gelöst durch eine Andruckrolle mit den Merkmalen des Anspruchs 1. Die Andruckrolle weist ein Rillenkugellager auf, welches um eine zu dessen Rotationsachse senkrechte Kippachse schwenkbar gelagert ist. Ein ebenfalls ein Teil der Andruckrolle darstellender Tragbolzen ist orthogonal zur Kippachse angeordnet, wobei das Rillenkugellager über eine Pendelhülse mit dem Tragbolzen schwenkbar gekoppelt ist. Die Kippachse ist durch unmittelbare Zusammenwirkung der radial innerhalb des Rillenkugellagers angeordneten Pendelhülse mit dem Tragbolzen realisiert. Es wird somit zusätzlich zum Tragbolzen, an welchem das gesamte Rillenkugellager begrenzt kippbar angelenkt ist, sowie zur Pendelhülse kein gesondertes Teil zur Ausbildung der Kippachse benötigt.

Die Pendelhülse umfasst zwei Hülsenhälften, welche jeweils einen Mantelabschnitt sowie einen fest mit diesem verbundenen Zapfen aufweisen, der einstückig an die Hülsenhälfse angeformt ist und in eine Bohrung im Tragbolzen eingreift. Die beiden die Pendelhülse bildenden Hülsenhälften sind nicht notwendigerweise miteinander verbunden. Vielmehr kann in besonders einfacher Ausgestaltung ein Spalt zwischen den Hülsenhälften gebildet sein. Dieser Spalt liegt gegebenenfalls in einer zur Kippachse normalen Ebene. Vorzugsweise sind die beiden Hülsenhälften identisch geformt.

Die Hülsenhälften sind rationell im Kunststoff-Spritzgussverfahren herstellbar, wobei der Zapfen einstückig an die jeweilige Hülsenhälfte angeformt und vorzugsweise hohl ist. Alternativ sind die Hülsenhälften auch als Metallteile oder unter gleichzeitiger Verwendung verschiedener Materialien, insbesondere im Zweikomponenten-Spritzgussverfahren, herstellbar.

Nach einer vorteilhaften Weiterbildung weist jede Hülsenhälfte auf ihrer Innenseite eine mit dem Tragbolzen zusammenwirkende Führungsfläche zum Sichern gegen Kippen der Pendelhülse um eine zur Kippachse sowie zum Tragbolzen senkrechten Achse auf.

Gemäß einer weiteren vorteilhaften Ausgestaltung weist jede Hülsenhälfte zwei mit dem Tragbolzen zusammenwirkende Begrenzungsflächen zum Begrenzen des Kippens der Pendelhülse und damit des gesamten Rillenkugellagers um die Kippachse auf.

Die Pendelhülse ist in bevorzugter Ausgestaltung etwa topfförmig gestaltet, wobei jede Hülsenhälfte einen an den Mantelabschnitt anschließenden Bodenabschnitt aufweist. Zwischen dem Bodenabschnitt und dem Mantelabschnitt ist vorzugsweise eine Nut auf der Außenseite der Hülsenhälfte ausgebildet, welche zum Eingriff eines Sicherungsrings vorgesehen ist, der die Pendelhülse gegenüber dem Innenring des Rillenkugellagers in Axialrichtung sichert.

Nachfolgend wird ein Ausführungsbeispiel der Erfindung anhand einer Zeichnung näher erläutert. Hierin zeigen in teilweise vereinfachten Darstellungen:

### Kurze Beschreibung der Zeichnung

- Fig. 1: eine Andruckrolle in einer ersten Schnittdarstellung,
- Fig. 2: die Andruckrolle nach Fig. 1 in einer weiteren Schnittdarstellung,

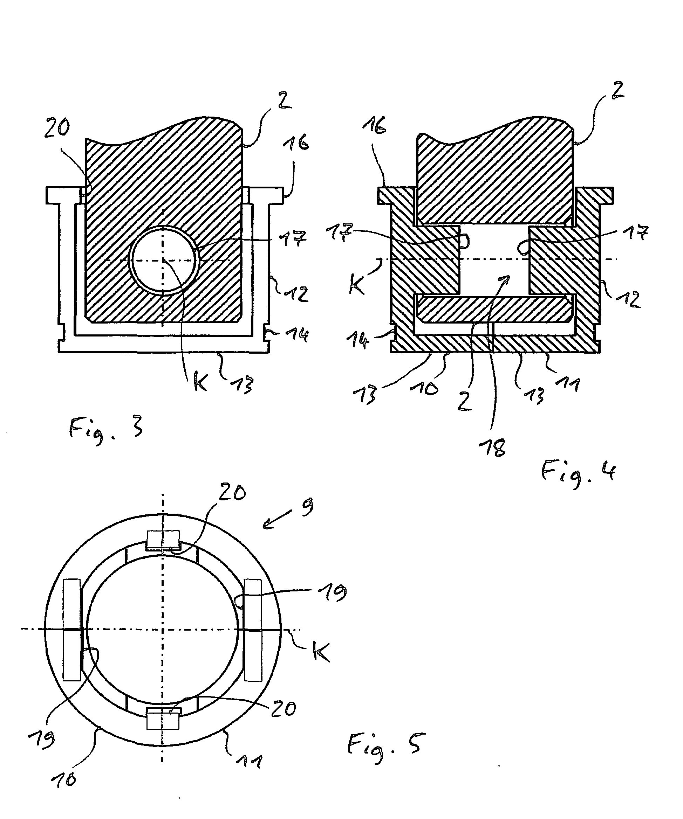

- Fig. 3,4: ausschnittsweise einen Tragbolzen sowie eine mit diesem zusammenwirkende Pendelhülse der Andruckrolle,
- Fig. 5: die Pendelhülse der Andruckrolle in einer Schnittdarstellung.

### Ausführliche Beschreibung der Zeichnung

Eine insgesamt mit dem Bezugszeichen 1 gekennzeichnete Andruckrolle, hinsichtlich deren prinzipieller Funktion auf den eingangs genannten Stand der Technik verwiesen wird, weist einen Tragbolzen 2 auf, auf welchem ein Wälzlager, nämlich ein Rillenkugellager 3, kippbar gelagert ist. Das Rillenkugellager 3 ist von einem Bezug 4 aus Kunststoff oder Gummi umgeben, der in einer Textilmaschine, insbesondere Texturiermaschine, einen Faden an eine nicht dargestellte Lieferwalze andrückt.

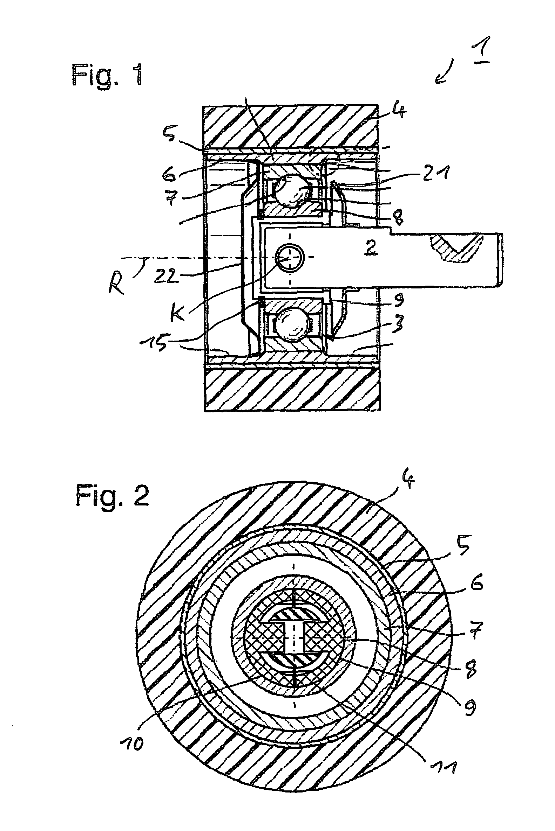

Der Bezug 4 umgibt eine Zwischenülse 5, welche wiederum eine als spanlos umgeformtes Blechteil ausgebildete Hülse 6 umgibt, in der ein Außenring 7 des Rillenkugellagers 3 gehalten ist. Der zugehörige Innenring 8 des Rillenkugellagers 3 nimmt eine Pendelhülse 9 auf, die das verbindende Element zum Tragbolzen 2 unter Wahrung der gewünschten Winkelbeweglichkeit darstellt. Die Kippachse, um welche das Rillenkugellager 3 relativ zum Tragbolzen 2 kippbar ist, ist mit K bezeichnet. Die Rotationsachse des Rillenkugellagers 3 ist mit R bezeichnet und schließt mit der Kippachse K in jedem Zustand der Andruckrolle 1 einen rechten Winkel ein. Solange das Rillenkugellager 3, wie in Fig. 1 dargestellt, nicht verkippt ist, fällt die Rotationsachse R mit der Längsachse des Tragbolzens 2 zusammen.

Die Pendelhülse 9 ist durch zwei identische Hülsenhälften 10,11 gebildet, welche jeweils einen an der Innenwandung des Innenrings 8 anliegenden Mantelabschnitt 12 und einen etwa halbkreisförmigen Bodenabschnitt 13 aufweisen. Am Übergang vom Bodenabschnitt 13 zum Mantelabschnitt 12 ist an der Außenseite der Hülsenhälfte 10,11 eine in Umfangsrichtung verlaufende Nut 14 gebildet, in welche ein am Innenring 8 anliegender Sicherungsring 15 eingreift. Auf der dem Bodenabschnitt 13 abgewandten Seite der Hülsenhälfte 10,11 weist diese einen Flanschabschnitt 16 auf, welcher ebenfalls am Innenring 8 anliegt und somit eine Sicherung zwischen der Pendelhülse 9 und dem Rillenkugellager 3 in Axialrichtung - bezogen auf die Rotationsachse R - darstellt.

An der Innenseite des Mantelabschnitts 12 ragt aus diesem ein im dargestellten Ausführungsbeispiel massiver Zapfen 17 heraus, welcher konzentrisch zur Kippachse K angeordnet ist und in eine Bohrung 18 im Tragbolzen 2 ragt. Im Ausführungsbeispiel ist die Bohrung 18 als Durchgangsbohrung gestaltet, welche beide Zapfen 17 der Hülsenhälften 10,11 aufnimmt. Abweichend hiervon könnte auch für jeden Zapfen 17 eine gesonderte, als Sackloch ausgebildete Bohrung 18 im Tragbolzen 2 vorgesehen sein. Als fertigungs- und montagetechnisch besonders günstig hat es sich herausgestellt, wenn, wie aus Fig. 2 hervorgeht, bei komplett montierter Andruckrolle 1 zwischen den Zapfen 17 ein größerer Spalt als zwischen den Mantelabschnitten 12 gebildet ist. Die beiden Hülsenhälften 10,11 sind durch keine an diese beiden Teile angeformten Verbindungsmittel miteinander gekoppelt.

Die direkt mit dem Tragbolzen 2 zusammenwirkende Pendelhülse 9 hat nicht nur die Aufgabe, eine begrenzte Schwenkbewegung um die Kippachse K zu ermöglichen, sondern minimiert zugleich sonstige, nicht gewünschte Kippbewegungen des Rillenkugellagers 3. Zu diesem Zweck weisen die Hülsenhälften 10,11 Führungsflächen 19 auf, die auf der Innenseite des Mantelabschnitts 12 an die Zapfen 17 anschließen und sich längs des Tragbolzens 2 erstrecken. Eine Begrenzung der Schwenkbewegung des Rillenkugellagers 3 um die Kippachse K ist durch Begrenzungsflächen 20 gegeben, die auf der Innenseite des Flanschabschnitts 16 ausgebildet sind und am Tragbolzen 2 anschlagen können. Zusätzlich oder alternativ kann die Schwenkbewegung des Rillenkugellagers 3 um die Kippachse K durch eine auf den Tragbolzen 2 aufgesetzte Scheibe 21 begrenzt sein, welche zugleich eine Abdeckung des Rillenkugellagers 3 auf derjenigen Seite darstellt, auf der der Tragbolzen 2 aus der Hülse 6 herausragt. Auf der gegenüberliegenden Seite des Rillenkugellagers 3 ist dieses durch einen mit der Hülse 6 rotierenden Scheibenabschnitt 22 abgedeckt.

### Bezugszeichenliste

- 1: Andruckrolle
- 2: Tragbolzen
- 3: Rillenkugellager
- 4: Bezug
- 5: Zwischenhülse
- 6: Hülse
- 7: Außenring
- 8: Innenring
- 9: Pendelhülse
- 10: Hülsenhälfte
- 11: Hülsenhälfte
- 12: Mantelabschnitt
- 13: Bodenabschnitt
- 14: Nut
- 15: Sicherungsring
- 16: Flanschabschnitt
- 17: Zapfen
- 18: Bohrung
- 19: Führungsfläche
- 20: Begrenzungsfläche
- 21: Scheibe
- 22: Scheibenabschnitt

- K: Kippachse
- R: Rotationsachse

## Patentansprüche

1. Andruckrolle, mit einem Rillenkugellager (3), welches um eine zu dessen Rotationsachse (R) senkrechte Kippachse (K) schwenkbar gelagert ist, sowie mit einem Tragbolzen (2), welcher orthogonal zur Kippachse (K) angeordnet ist, wobei das Rillenkugellager (3) über eine Pendelhülse (9) mit dem Tragbolzen (2) gekoppelt ist, **dadurch gekennzeichnet, dass** die Kippachse (K) durch unmittelbare Zusammenwirkung der Pendelhülse (9) mit dem Tragbolzen (2) realisiert ist, wobei die Pendelhülse (9) zwei Hülsenhälften (10,11) aufweist, welche jeweils einen Mantelabschnitt (12) sowie einen fest mit diesem verbundenen Zapfen (17) aufweisen, der einstückig an die Hülsenhälfte (10,11) angeformt ist und in eine Bohrung (18) im Tragbolzen (2), um eine Schwenkbewegung um die Kippachse (K) zu ermöglichen, eingreift.

2. Andruckrolle nach Anspruch 1, **dadurch gekennzeichnet, dass** die beiden Hülsenhälften (10,11) identisch geformt sind.

3. Andruckrolle nach Anspruch 1, **dadurch gekennzeichnet, dass** die Hülsenhälfte (10,11) als Kunststoff-Spritzgussteil ausgebildet ist.

4. Andruckrolle nach einem der Ansprüche 1 bis 3, **dadurch gekennzeichnet, dass** jede Hülsenhälfte (10,11) eine mit dem Tragbolzen (2) zusammenwirkende Führungsfläche (19) zum Sichern gegen Kippen der Pendelhülse (9) um eine zur Kippachse (K) sowie zum Tragbolzen (2) senkrechte Achse aufweist.

5. Andruckrolle nach einem der Ansprüche 1 bis 4, **dadurch gekennzeichnet, dass** jede Hülsenhälfte (10,11) zwei mit dem Tragbolzen (2) zusammenwirkende Begrenzungsflächen (20) zum Begrenzen des Kippens der Pendelhülse (9) um die Kippachse (K) aufweist.

6. Andruckrolle nach einem der Ansprüche 1 bis 5, **dadurch gekennzeichnet, dass** die Hülsenhälfte (10,11) einen an den Mantelabschnitt (12) anschließenden Bodenabschnitt (13) aufweist.

7. Andruckrolle nach Anspruch 6, **gekennzeichnet durch** eine zwischen dem Bodenabschnitt (13) und dem Mantelabschnitt (12) ausgebildete Nut (14) auf der Außenseite der Hülsenhälfte (10,11).

## Claims

1. Pressure roller having a grooved ball bearing (3) which is pivotably mounted about a tilting axis (K) that is perpendicular to the rotational axis (R) of said bearing, and having a supporting bolt (22) which is arranged orthogonally to the tilting axis (K), wherein the grooved ball bearing (3) is coupled to the supporting bolt (2) via a pendulum sleeve (9), **characterized in that** the tilting axis (K) is implemented by direct interaction of the pendulum sleeve (9) with the supporting bolt (2), wherein the pendulum sleeve (9) has two sleeve halves (10, 11) which each have a jacket section (12) and a spigot (17) which is fixedly connected to the latter, said spigot (17) being integrally formed on the sleeve half (10, 11) and engaging in a bore (18) in the supporting bolt (2) in order to enable a pivoting movement about the tilting axis (K).

2. Pressure roller according to Claim 1, **characterized in that** the two sleeve halves (10, 11) are identically shaped.

3. Pressure roller according to Claim 1, **characterized in that** the sleeve half (10, 11) is formed as a plastic injection-moulded part.

4. Pressure roller according to one of Claims 1 to 3, **characterized in that** each sleeve half (10, 11) has a guide surface (19) which interacts with the supporting bolt (2) to safeguard the pendulum sleeve (9) against tilting about an axis which is perpendicular in relation to the tilting axis (K) and the supporting bolt (2).

5. Pressure roller according to one of Claims 1 to 4, **characterized in that** each sleeve half (10, 11) has two limiting surfaces (20) which interact with the supporting bolt (2) to limit the tilting of the pendulum sleeve (9) about the tilting axis (K).

6. Pressure roller according to one of the Claims 1 to 5, **characterized in that** the sleeve half (10, 11) has a bottom section (13) which adjoins the jacket section (12).

7. Pressure roller according to Claim 6, **characterized by** a groove (14) on the outside of the sleeve half (10, 11), said groove (14) being formed between the bottom section (13) and the jacket section (12).

## Revendications

1. Rouleau presseur, comprenant un roulement à billes rainuré (3), qui est monté de manière à pouvoir pivoter autour d'un axe de basculement (K) perpendiculaire à son axe de rotation (R), ainsi qu'un boulon de support (2) qui est disposé perpendiculairement à l'axe de basculement (K), le roulement à billes rainuré (3) étant accouplé par le biais d'une douille oscillante (9) au boulon de support (2), **caractérisé en ce que** l'axe de basculement (K) est réalisé par coopération directe de la douille oscillante (9) avec le boulon de support (2), la douille oscillante (9) présentant deux moitiés de douille (10, 11) qui présentent chacune une portion d'enveloppe (12) ainsi qu'un tourillon (17) connecté fixement à celle-ci, lequel est façonné d'une seule pièce sur la moitié de douille (10, 11) et vient en prise dans un alésage (18) dans le boulon de support (2), afin de permettre un mouvement de pivotement autour de l'axe de basculement (K).

2. Rouleau presseur selon la revendication 1, **caractérisé en ce que** les deux moitiés de douille (10, 11) sont formées de manière identique.

3. Rouleau presseur selon la revendication 1, **caractérisé en ce que** la moitié de douille (10, 11) est réalisée sous forme de pièce moulée par injection de plastique.

4. Rouleau presseur selon l'une quelconque des revendications 1 à 3, **caractérisé en ce que** chaque moitié de douille (10, 11) présente une surface de guidage (19) coopérant avec le boulon de support (2), pour la fixation contre le basculement de la douille oscillante (9) autour d'un axe perpendiculaire à l'axe de basculement (K) et au boulon de support (2).

5. Rouleau presseur selon l'une quelconque des revendications 1 à 4, **caractérisé en ce que** chaque moitié de douille (10, 11) présente deux surfaces de limitation (20) coopérant avec le boulon de support (2) pour limiter le basculement de la douille oscillante (9) autour de l'axe de basculement (K).

6. Rouleau presseur selon l'une quelconque des revendications 1 à 5, **caractérisé en ce que** la moitié de douille (10, 11) présente une portion de fond (13) se raccordant à la portion d'enveloppe (12).

7. Rouleau presseur selon la revendication 6, **caractérisé par** une rainure (14) réalisée entre la portion de fond (13) et la portion d'enveloppe (12) sur le côté extérieur de la moitié de douille (10, 11).
